# EUROPÄISCHE PATENTSCHRIFT

(11) **EP 0 491 164 B1**
(45) Veröffentlichungstag und Bekanntmachung des Hinweises auf die Patenterteilung: **26.08.1998**
(21) Anmeldenummer: 91119412.4
(22) Anmeldetag: 14.11.1991
(51) Int. Cl.: B32B 27/18, A01N 25/34

(54) **Verwendung einer mehrschichtigen Folie zur Herstellung von Verpackungen**
Use of a multilayer laminate for the production of packaging materials
Utilisation d'un matériau stratifié pour la production d'emballages

(30) Priorität: 19.12.1990 DE 4040586
(43) Veröffentlichungstag der Anmeldung: 24.06.1992
(73) Patentinhaber: FIRMA VIATECH HOLDING GmbH, D-87437 Kempten (DE)
(72) Erfinder: Diete, Günter, W-8953 Obergünzburg (DE); Fischer, Arthur, W-8970 Immenstadt (DE); Remer, Nikolaus, W-8000 München 71 (DE)
(74) Vertreter: Pfister, Helmut, Dipl.-Ing.

(56) Entgegenhaltungen:
- EP-A- 0 075 540
- EP-A- 0 217 275
- EP-A- 0 223 531
- CA-A- 740 417

## Beschreibung

Die Erfindung betrifft eine mehrschichtige Folie aus Kunststoff für Vakuumverpackungsmaschinen.

Es ist bekannt, bei der Herstellung von Vakuumverpackungen mehrschichtige Folien anzuwenden. Den verschiedenen Schichten der Folie sind dabei unterschiedliche Aufgaben zugewiesen. Beispielsweise soll die eine Schicht die mechanische Festigkeit ergeben, während andere Schichten die Dichtheit oder die Siegelungsfähigkeit erreichen sollen. In anderen Fällen ist eine Schicht oder sind einige Schichten besonders geeignet, die Folie zu dehnen, um diese an das Verpackungsgut anzupassen oder auch, um bei einem Erwärmungsvorgang ein Schrumpfen zu bewirken.

Nach dem Verpackungsvorgang liegt die Folie am Verpackungsgut mehr oder weniger dicht an. Die Haltbarkeit der Verpackung bzw. des Verpackungsgutes hängt dabei im wesentlichen von der Dichtheit der Folie ab bzw. auch davon, wie sich das Verpackungsgut gegebenenfalls verändert.

Das Verpackungsgut kann verschiedener Natur sein. Es können Instrumente für medizinische Zwecke verpackt sein oder auch andere Waren, bei denen ein Schutz vor äußeren Einflüssen erwünscht ist. Das Verpackungsgut kann auch ein Lebensmittel sein.

Der Erfindung liegt die Aufgabe zugrunde, eine Verpackung zu schaffen, mit der es möglich ist, die Haltbarkeit des verpackten Gutes zu verbessern. Zur Lösung dieser Aufgabe geht die Erfindung von einer mehrschichtigen Folie aus Kunststoff für Vakuumverpackungsmaschinen aus. Erfindungsgemäß ist diese einzusetzende Folie dadurch gekennzeichnet, daß die dem Verpackungsgut zugewandte Folienschicht eine Kunststoffmatrix ist, in die flüchtige Substanzen eingelagert sind, die nach dem Evakuieren und Verschließen der Verpackung langsam in die Verpackung diffundieren.

Während bisher bei einer Verpackungsaufgabe davon ausgegangen wurde, das Verpackungsgut sinngemäß vorzubereiten, beispielsweise mit einem Oberflächenschutz, der korrisionshemmend ist zu versehen und dann das Verpackungsgut möglichst dicht einzupacken, um auf diese Weise eine lange Haltbarkeitsdauer zu erzielen, liegt der Erfindung die Überlegung zugrunde, das Verpackungsgut während der Verpackungsdauer bzw. während der Lagerungsdauer nicht nur vor äußeren Einflüssen zu schützen, sondern in günstiger Weise durch Substanzen zu beeinflussen oder diese Substanzen in der Verpackung wirken zu lassen, wobei die Substanzen von vornherein in der Verpackungsfolie angeordnet sind, und die dann nach dem Evakuieren und Verschließen der Verpackung unter der Wirkung des Vakuums langsam in das Innere der Verpackung diffundieren. Auf diese Weise wird nach der Fertigstellung der Verpackung nachträglich noch ein Einfluß auf das Verpackungsgut ausgeübt, um z.B. dessen Lebensdauer zu erhöhen.

In der DE-OS 34 47 833 ist ein Tuch, eine Folie oder dergleichen mit darin integrierten, einen Wirkstoff enthaltenden Mikrokapseln beschrieben. Als Wirkstoffe sind dabei Pflegemittel oder dergleichen erwähnt. Die mehrschichtige Folie nach diesem Vorschlag wird in der angestrebten Weise wirksam, wenn die Folie beansprucht wird, wenn also die Mikrokapseln platzen.

Aus EP-A-0,217,275 ist eine Folie bekannt, die eine Schicht, die aus einer Polyolefin und einem Wirkstoff besteht, und ein Substrat, aufweist, wobei die Folie als antiseptisches Verpackungsmaterial für Lebens mittel und als Korrosionshemmendes Verpackungsmaterial für Maschinen verwendet wird

Im Gegensatz dazu zielt die Erfindung auf ein Zusammenwirken des Vakuums von Vakuumverpackungen mit den eingelagerten Substanzen, um die Substanzen dazu zu bringen, einerseits aus der Kunststoffmatrix auszutreten und andererseits in das Innere der Verpackung zu diffundieren, um so einen länger wirkenden Einfluß auf das Verpackungsgut auszuüben.

Das Vakuum, das im Zusammenhang mit der Erfindung angewandt wird, ist in der Regel von der Qualität, wie dies bei Vakuumverpackungsmaschinen üblich ist. Es ist jedoch nicht notwendig, immer ein sehr hohes Vakuum anzustreben. Auch das Vakuum, das in einer Skin-Packung regelmäßig vorhanden ist, reicht im allgemeinen für die erfindungsgemäßen Zwecke aus.

Bei der Erfindung ist insbesondere vorgesehen, daß eine außenliegende Folienschicht im wesentlichen die Dichtheit der Verpackung bewirkt. Die dem Verpackungsgut zugewandte Folienschicht muß daher nicht notwendigerweise wesentlich zur Dichtheit beitragen, vielmehr kann die Verpackungsmatrix dahingehend ausgebildet werden, daß sie die flüchtigen Substanzen aufnimmt und unter dem Vakuumeinfluß nach und nach abgibt.

Insbesondere bildet die außenliegende Folienschicht eine Sauerstoffsperre, um den nachteiligen Einfluß des Luftsauerstoffes zu verhindern oder doch zu verringern.

Die dem Verpackungsgut zugewandte Folienschicht muß nicht die innerste Schicht sein. Es ist möglich, die Kunststoffmatrix, die die Substanzen aufnimmt, auf der Seite des Verpackungsgutes zusätzlich abzudecken, vorausgesetzt natürlich, daß diese Schicht ausreichend durchlässig ist, um den angestrebten Zweck zu erreichen. Diese innerste Schicht kann beispielsweise zur Verbesserung der Siegelfähigkeit vorgesehen sein, was notwendig ist, um ein Verpackungsgut, das zwischen zwei Folien eingelegt wird, durch eine Randsiegelung, die das Verpackungsgut umgibt, dicht zu umhüllen.

Für die Verbindung der einzelnen Schichten der erfindungsgemäß einzusetzende Folie können die herkömmlichen Arbeitsweisen angewandt werden. Dabei sieht die Erfindung vor, daß eine der Schichten, insbesondere die außenliegende Schicht als Dispersion aufgebracht ist.

In die Kunststoffmatrix können insbesondere reduzierende Substanzen eingelagert sein, die dann während der Lagerdauer bewirken, daß Sauerstoff in der Packung, unabhängig seiner Herkunft, aufgenommen und von seiner Einwirkung auf das Verpackungsgut abgehalten wird.

In die Kunststoffmatrix können auch Korrosionshemmer eingelagert sein. Diese Substanzen wirken dann nach und nach auf die Oberfläche des Verpackungsgutes ein und unterdrücken die Korrosion, beispielsweise das Rosten oder auch andere unerwünschte Veränderungen der Oberfläche des Verpackungsgutes.

In die Kunststoffmatrix können nach einem weiteren Vorschlag der Erfindung antibakteriell wirkende Substanzen eingelagert sein. Dabei wird der Vorteil erhalten, daß die antibakterielle Wirkung während der Lagerung ausgelöst wird, was den Vorteil mit sich bringt, daß diese Wirkung erst zu einem späteren Zeitpunkt auftritt, zu dem weitere Infektionen möglich sind. Die Substanzen in der Kunststoffmatrix werden daher vorzugsweise zu einem Zeitpunkt wirksam, zu dem die Wirkung anderer Substanzen, die im Verpackungsgut oder auf dem Verpackungsgut schon vor dem Verpacken angeordnet worden sind, in ihrer Wirkung nachlassen.

Nach einem weiteren Ausführungsbeispiel der Erfindung können die in die Kunststoffmatrix eingelagerten Substanzen Aromastoffe sein. Die Aromatisierung kann daher eine länger andauernde Wirkung erhalten und wird weniger dadurch beeinflußt, daß die Aromastoffe beispielsweise mit dem Verpackungsgut selbst in unerwünschter Weise reagieren.

Bei einem anderen Anwendungsbeispiel der Erfindung sind in die Kunststoffmatrix alterungshemmende Substanzen eingelagert. Dabei ist es günstig, daß in der gleichen Weise, wie das Verpackungsgut altert, diese gegenwirkenden Substanzen zum Einsatz kommen.

Insbesondere schlägt die Erfindung vor, daß in die Kunststoffmatrix Natriumnitrit eingelagert ist. Beispielsweise kann hierbei die korrosionshemmende Wirkung dieses Stoffes ausgenutzt werden.

Ein weiteres Anwendungsbeispiel für die erfindungsgemäße Folie besteht in der Einlagerung von gesundheits-relevanten Stoffen. Derartige Stoffe können zum Beispiel nachteilige Veränderungen des Verpackungsgutes verhindern. Beispielsweise ist in diesen Zusammenhang auch der Einsatz von Ascorbinsäure möglich.

Die Stoffe können auch dergestalt sein, daß sie unwerwünschte Farbveränderungen beim Verpackungsgut verhindern.

Es ist klar, daß auch die Anwendung einer Kombination verschiedener Stoffe bei der Erfindung möglich ist.

Die Substanzen können in verschiedener Weise in die Kunststoffmatrix eingebracht werden. Die Stoffe können schon vor der Ausbildung der Folie, also beispielsweise vor dem Folienblasvorgang, in das Material eingebracht sein. In anderen Fällen kann es vorteilhaft sein, auf eine Trägerfolie geeignete Dispersionen mit den in Rede stehenden Substanzen aufzubringen, die nach dem Antrocknen dann die dem Verpackungsgut zugewandte Schicht bilden. Es kann auch die verhältnismäßig geringe Saugkraft bestimmter Folien ausgenutzt werden, um die Substanzen in die Folie einzubringen.

In der Zeichnung ist die Erfindung schematisch dargestellt. Es zeigen:
- Fig.1: einen Schnitt durch eine evakuierte Verpackung,
- Fig. 2 und Fig. 3: stark vergrößterte Schnitte durch mehrschichtige Folien, gemäß der Erfindung.

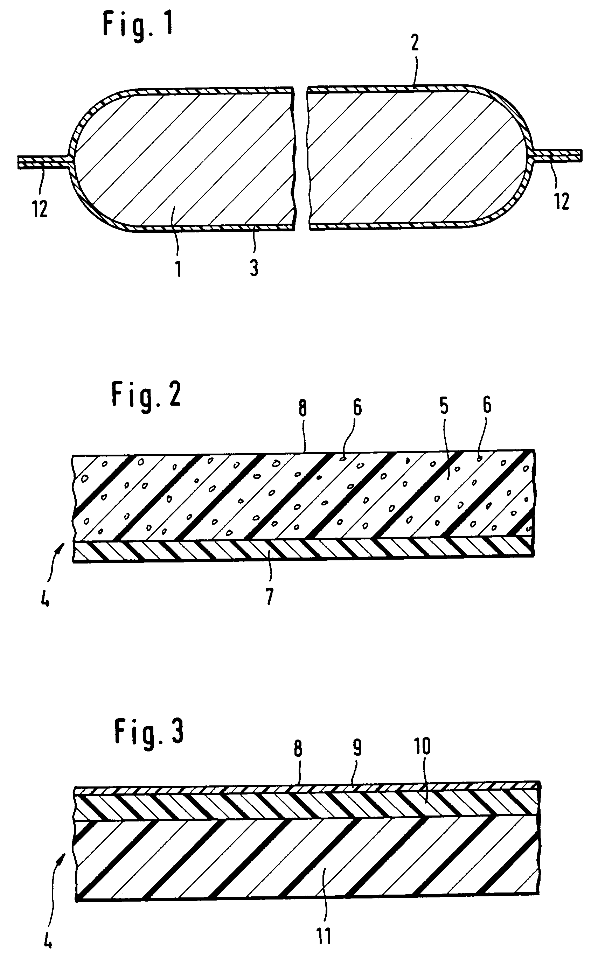

In der Darstellung der Fig. 1 ist eine Verpackung gezeigt, in der ein Gegenstand 1 beliebiger Gestalt allseits von mehrschichtigen Folien 2 und 3 umgeben ist. Diese Folien sind am Rand in einem Streifen 12 miteinander versiegelt, also dicht verbunden. Vor der Versiegelung ist der Innenraum zwischen den Folien 2 und 3, der den Gegenstand 1 aufnimmt, evakuiert worden.

Für die Folien 2 und 3 der Darstellung der Fig. 1 findet beispielsweise die mehrschichtige Folie 4 der Darstellung der Fig. 2 Verwendung. Diese mehrschichtige Folie 4 besitzt eine Folienschicht 5, die als Kunststoffmatrix ausgebildet ist. In die Kunststoffmatrix sind Stoffe eingebracht, die in der Darstellung der Fig. 2 als kleine Teilchen 6 angedeutet sind. Die Kunststoffmatrix 5 mit den in der Matrix angeordneten Stoffen kann jedoch auch völlig homogen sein, was dann der Fall sein wird, wenn die eingelagerten Stoffe beispielsweise in der Kunststoffmatrix 5 gelöst sind.

Die Kunststoffmatrix 5 ist mit einer weiteren Folienschicht 7 verbunden, die die Außenschicht der mehrschichtigen Folie bildet. Diese mehrschichtige Folie 4 liegt also mit der Fläche 8 an dem zu verpackenden Gegenstand 1 an. Die Schicht 7, die beispielsweise auch als Dispersion aufgebracht sein kann, hat im wesentlichen die Aufgabe, die Dichtheit der Verpackungen zu bewirken.

Beim Ausführungsbeispiel nach der Fig. 3 besteht die mehrschichtige Folie 4 aus insgesamt drei Schichten. Es ist eine vergleichsweise dünne innere Schicht 9 vorgesehen, die mit der Fläche 8 am verpackten Gut anliegt. Diese Schicht 9 kann beispielsweise als Dispersion aufgebracht sein. Die Schicht 10 dient als Träger der Schicht 9 oder auch als Haftvermittler. Die Schicht 11 hat die Aufgabe, der mehrschichtigen Folie 4 die mechanische Festigkeit zu geben und das Versiegeln im Randbereich 12 zu ermöglichen.

Die Schicht 9 enthält die flüchtige Substanz bzw. ist die Schicht 9 die flüchtige Substanz, die nach dem Evakuieren und Verschließen der Verpackung langsam in die Verpackung diffundiert.

## Patentansprüche

1. Verwendung einer mehrschichtigen Folie aus Kunststoff zur Herstellung von Verpackungen in Vakuumverpackungsmaschinen, wobei die dem Verpackungsgut zugewandte Folienschicht eine Kunststoffmatrix ist, in die flüchtige Substanzen eingelagert sind, die nach dem Evakuieren und Verschließen der Verpackung langsam in die Verpackung diffundieren.

2. Folie zur Verwendung nach Anspruch 1, wobei eine außenliegende Folienschicht im wesentlichen die Dichtheit der Verpackung bewirkt.

3. Folie zur Verwendung nach Anspruch 1, wobei die außenliegende Folienschicht eine Sauerstoffsperre bildet.

4. Folie zur Verwendung nach Anspruch 1, **dadurch gekennzeichnet, daß** eine der Schichten als Dispersion aufgebracht ist.

5. Folie zur Verwendung nach Anspruch 1, **dadurch gekennzeichnet, daß** in der Kunststoffmatrix reduzierende Substanzen eingelagert sind.

6. Folie zur Verwendung nach Anspruch 1, **dadurch gekennzeichnet, daß** in die Kunststoffmatrix Aromastoffe eingelagert sind.

7. Folie zur Verwendung nach Anspruch 1, **dadurch gekennzeichnet, daß** in die Kunststoffmatrix alterungshemmende Substanzen eingelagert sind.

8. Folie zur Verwendung nach Anspruch 1, **dadurch gekennzeichnet**, **daß** in die Kunststoffmatrix Natriumnitrit eingelagert ist.

## Claims

1. The use of a multi-layer film of synthetic material for the production of packaging in vacuum packaging machines, the film layer facing the packed product being a plastic matrix containing volatile substances which slowly diffuse into the packaging after it has been evacuated and sealed.

2. A film for use according to claim 1, with impermeability of the packaging essentially being effected by an outside film layer.

3. A film for use according to claim 1, with the outside film layer constituting an oxygen barrier.

4. A film for use according to claim 1, **characterized in that** one of the layers has been applied as a dispersion.

5. A film for use according to claim 1, **characterized in that** the plastic matrix contains reducing substances.

6. A film for use according to claim 1, **characterized in that** the plastic matrix contains aromatic substances

7. A film for use according to claim 1, **characterized in that** the plastic matrix contains substances inhibiting ageing.

8. A film for use according to claim 1, **characterized in that** the plastic matrix contains sodium nitrite.

## Revendications

1. Utilisation d'une feuille en plastique multicouche pour la fabrication d'emballages par des machines d'emballage sous vide, la couche qui se trouve contre la marchandise à emballer consiste en un réseau dans lequel des substances volatiles ont été intégrées et diffusent lentement vers l'intérieur de l'emballage après la mise sous vide et le scellement de l'emballage.

2. Feuille pour une utilisation selon la revendication 1, une des couches extérieures de la feuille multicouche assurant principalement l'étanchéité de l'emballage.

3. Feuille pour une utilisation selon la revendication 1, la couche extérieure étant imperméable à l'oxygène.

4. Feuille pour une utilisation selon la revendication 1, caractérisée en ce qu'une des couches est déposée par un procédé de pulvérisation.

5. Feuille pour une utilisation selon la revendication 1, caractérisée en ce que des substances réductrices sont intégrées dans le réseau de la feuille.

6. Feuille pour une utilisation selon la revendication 1, caractérisée en ce que des substances aromatisantes sont intégrées dans le réseau de la feuille.

7. Feuille pour une utilisation selon la revendication 1, caractérisée en ce que des substances ralentissant le vieillissement sont intégrées dans le réseau de la feuille.

8. Feuille pour une utilisation selon la revendication 1, caractérisée en ce que du nitrite de sodium est intégré dans le réseau de la feuille.
